# EUROPÄISCHE PATENTSCHRIFT

(11) **EP 0 747 284 B1**
(45) Veröffentlichungstag und Bekanntmachung des Hinweises auf die Patenterteilung: **29.03.2000**
(21) Anmeldenummer: 96109076.8
(22) Anmeldetag: 05.06.1996
(51) Int. Cl.: B62H 5/00, E05B 67/00

(54) **Blockiereinrichtung für ein mobiles Objekt, insbesondere ein Zweirad**
Locking apparatus for a mobile object, in particular a bicycle
Dispositif antivol pour un objet mobile, en particulier une bicyclette

(30) Priorität: 07.06.1995 DE 19520728
(43) Veröffentlichungstag der Anmeldung: 11.12.1996
(73) Patentinhaber: Aug. Winkhaus GmbH & Co. KG, 48291 Telgte (DE)
(72) Erfinder: Kortenbrede, Ludger, 48291 Telgte (DE)
(74) Vertreter: Weickmann, Heinrich, Dipl.-Ing.

(56) Entgegenhaltungen:
- EP-A- 0 264 942
- DE-A- 4 400 066
- DE-C- 876 220
- GB-A- 2 256 837
- US-A- 5 289 704

## Beschreibung

Die Erfindung betrifft eine Blockiereinrichtung für ein mobiles Objekt, insbesondere ein Zweirad, umfassend ein flexibles Strangmittel, welches zum einen an dem mobilen Objekt verankert oder verankerbar ist und zum anderen unter Verwendung von zwei zusammenwirkenden Schlingenschließmitteln zu einer Schlinge schließbar ist, wobei von den Schlingenschließmitteln mindestens eines mit einem schließgeheimnisreagiblen Schließwerk ausgerüstet ist und wobei von den beiden Schlingenschließmitteln ein erstes an dem flexiblen Strangmittel verankert ist.

Eine Blockiereinrichtung dieser Art ist aus der DE-PS 876 220 bekannt.

Bei der bekannten Blockiereinrichtung ist von einem Rahmenrohr eines Zweirads das flexible Strangmittel aufgenommen. Innerhalb des Rahmenrohrs ist das flexible Strangmittel an seinem Primärende mit einer Verankerungskugel verbunden, etwa verpreßt oder verlötet oder verschweißt. Die Verankerungskugel ist im Durchmesser so bemessen, daß sie durch ein Loch in dem Rahmenrohr, durch welches hindurch das flexible Strangmittel in das Rahmenrohr eingeführt ist, nicht hindurchgehen kann und deshalb zusammen mit diesem Loch eine Verankerungseinrichtung bildet. Am anderen, dem Sekundärende des flexiblen Strangmittels ist ein Schließbolzen angebracht, der mit einer Schließbolzenaufnahme eines Schließwerks zusammenwirken kann; das Schließwerk ist dabei selbst an einem Rahmenteil des Zweirads fest angebracht. Für den Fahrbetrieb des Zweirads kann das flexible Strangmittel im wesentlichen vollständig in das Rahmenrohr eingeschoben oder durch eine dort vorhandene Zugfeder in das Rahmenrohr hineingezogen werden, solange bis der Schließbolzen von außen kommend an der Umrandung des Lochs in dem Rahmenrohr anstößt. Zur Vorbereitung einer Blockierung des Zweirads wird der Schließbolzen erfaßt und mit seiner Hilfe das flexible Strangmittel durch das Loch des Rahmenrohrs herausgezogen, äußerstenfalls bis zum Anschlag der Verankerungskugel von innen kommend an der Umrandung des Lochs. Dann kann das flexible Strangmittel entweder um ein zu blockierendes Rad des Zweirads oder um einen ortsfesten Umschlingungsgegenstand, z.B. Baum, Laternenpfahl, Kellergitterstab oder dgl., herumgelegt werden; schließlich wird unter Schlingenschließung der Schließbolzen in die Schließbolzenaufnahme des Schließwerks eingeführt und dort entweder zwangsläufig oder durch Schließgeheimnisbetätigung verrastet. Zur Öffnung der Schlinge und Lösung der Blockierung wird unter Anwendung des Schließgeheimnisses der Schließbolzen aus der Schließbolzenaufnahme des Schließwerks gelöst.

Die bekannte Ausführungsform hat gegenüber anderen Blockiersystemen an Zweirädern den erheblichen Vorteil, daß sie durch die Verankerung an dem Zweiradrahmen an diesen unlösbar gebunden ist mit der Folge, daß die Blockiereinrichtung am Zweirad stets präsent ist, mitgeführt wird und bei Blockierungsbedarf zur Verfügung steht.

Es können Situationen auftreten, in denen die starre Anbringung des Schließwerks an dem Zweiradrahmen nachteilig empfunden wird: Da das Schließwerk mit der Schließbolzenaufnahme betriebsmäßig starr am Zweiradrahmen angebracht ist, besteht der Zwang, die Schließ- und Öffnungsmanipulationen am Schließwerk jeweils an einem festgelegten rahmenfesten Ort durchzuführen, der u. U., etwa bei Abstützung des Fahrrads durch eine Hauswand oder einen Fahrradständer oder einen Gartenzaun, schwer zugänglich sein kann.

Neben diesem ergonomischen Problem kann sich auch ein herstellungstechnisches Problem ergeben insofern, als der Anbau des Schließwerks an dem Fahrradrahmen einen verhältnismäßig massiven Eingriff in die Struktur des Fahrradrahmens erfordern kann. Dadurch kann die Abstimmung zwischen dem Fahrradhersteller und dem Hersteller der Blockiereinrichtung erschwert werden.

Der Erfindung liegt die Aufgabe zugrunde, eine Blockiereinrichtung, insbesondere für Zweiräder, anzugeben, die für den Benutzer ergonomisch günstig ist. Dabei können, müssen aber nicht, auch die oben dargestellten Probleme der bekannten Ausführungsform nach der DE-PS 876 220 in Betracht gezogen werden.

Zur Lösung der Aufgabe wird erfindungsgemäß vorgeschlagen, daß ein zweites von den beiden Schlingenschließmitteln auf einem Läufer angeordnet ist, welcher längs des flexiblen Strangmittels auf wenigstens einem Teil des Weges zwischen dessen Verankerung an dem mobilen Objekt und dem ersten Schlingenschließmittel beweglich ist.

Wenn hier von einer "Blockiereinrichtung" gesprochen wird, so ist dieser Begriff sehr allgemein zu verstehen: Im Falle eines Zweirads oder eines anderen Fahrzeugs soll die Blockiereinrichtung beispielsweise so anwendbar sein, daß bei der Schlingenbildung das flexible Strangmittel durch ein Laufrad oder ein Kettenrad hindurchgeführt wird, so daß das Fahrzeug sozusagen in sich blockiert wird; denkbar ist aber auch die Möglichkeit, daß bei der Schlingenbildung die Schlinge um einen Baum, um einen Laternenpfahl oder um einen Kellergitterstab heraumgeschlossen wird, so daß eine ortssichernde Blockierung vorliegt.

Wenn hier von mobilen Objekten gesprochen wird, so sind neben Zweirädern beispielsweise auch Baugeräte an einer öffentlich zugänglichen Baustelle oder Parkbearbeitungsgeräte, wie Rasenmäher, in Betracht zu ziehen.

Die Blockiereinrichtung kann in der Weise ausgebildet sein, daß das flexible Strangmittel an einem Primärende ein Verankerungsmittel für die Verankerung an dem mobilen Objekt aufweist und an einem Sekundärende mit dem ersten Schlingenschließmittel verbunden ist. Dann ist bei gegebener Länge des Strangmittels ein maximaler Längenanteil des Strangmittels zur Schlingenbildung verfügbar.

Für den Benutzer ist es ergonomisch günstig, wenn das Schließwerk an dem ersten Schlingenschließmittel angebracht ist; für den Objekthersteller, insbesondere Zweirad-Hersteller, ergeben sich daraus auch Vorteile bei der später noch zu erörternden Festlegung der Blockiereinrichtung an dem Objekt während der Nutzung des Objekts.

Für die Gestaltung des Schließwerks und des damit vereinigten Schlingenschließmittels ist es von Vorteil, wenn das mit dem Schließwerk ausgerüstete Schlingenschließmittel eine Schließbolzenaufnahme für einen an dem anderen Schlingenschließmittel angebrachten Schließbolzen aufweist.

Bei einem Zweirad, aber auch bei einem mobilen Baugerät oder Parkbearbeitungsgerät, ist es erwünscht, während der Benutzung, also z. B. während der Fahrt oder während einer Mäharbeit, die Blockiereinrichtung so festzulegen, daß sie mit der Funktion des Objekts nicht in Kollision kommt. Aus diesem Grunde wird weiter empfohlen, daß an dem mobilen Objekt Festlegemittel für die Festlegung des flexiblen Strangmittels oder/und des ersten Schlingenschließmittels oder/und des Läufers angebracht sind oder anbringbar sind. Hierfür gibt es zahlreiche Möglichkeiten:

Als Festlegemittel für das flexible Strangmittel kann beispielsweise eine Aufnahmeführung, insbesondere in Form eines Aufnahmekanals, an dem mobilen Objekt vorgesehen sein, so daß das flexible Strangmittel dann relativ zu der Aufnahmeführung zwischen einer Festlegestellung (für die Fahrt) und einer Blockierbereitschaftsstellung ein- und ausfahrbar ist. Der Begriff "Aufnahmeführung" kann dabei im weitesten Sinne verstanden werden. Eine Aufnahmeführung wäre z. B. auch eine Kabeltrommel. Ein Aufnahmekanal kann von einem objekteigenen Rohr, beispielsweise einem Rahmenrohr eines Fahrzeugs, gebildet sein oder auch von einem Rohrstück, das speziell für die Festlegung des flexiblen Strangmittels an dem jeweiligen Objekt vorgesehen wird.

Als Aufnahmemittel für das erste Schlingenschließmittel kann an dem mobilen Objekt eine Aufnahmekammer vorgesehen sein. Auch der Begriff "Aufnahmekammer" ist in weitestem Sinne zu verstehen: Sofern nicht Witterungsschutz von der Aufnahmekammer erwartet wird, kann diese beispielsweise auch von einem Aufnahmerahmen oder Aufnahmekorb gebildet sein.

Die Aufnahmekammer für das erste Schlingenschließmittel kann beispielsweise an einem Ende der Aufnahmeführung für das flexible Strangmittel angebracht werden, durch welches hindurch das flexible Strangmittel in die Aufnahmeführung ein- bzw. ausfahrbar ist. Auf diese Weise wird ein optisch und technologisch harmonischer Übergang zwischen dem flexiblen Strangmittel und dem ersten Schlingenschließmittel in der Festlegestellung am jeweiligen Objekt erreicht.

Die Festlegemittel sollten natürlich so ausgebildet sein, daß während der Fahrt keinerlei Verlagerung eintreten kann und auch keine Wackelgeräusche entstehen können. Aus diesem Grunde ist es erwünscht, daß das erste Schlingenschließmittel in der Aufnahmekammer feststellbar ist, beispielsweise durch eine Federrast.

Das zweite Schlingenschließmittel kann an dem ersten Schlingenschließmittel oder/und an einem Festlegemittel für das erste Schlingenschließmittel festgestellt werden. Dabei ist insbesondere daran gedacht, das zweite Schlingenschließmittel gemeinsam mit dem ersten Schlingenschließmittel diesem vorauslaufend in eine Aufnahmekammer einzuführen und in dieser Aufnahmekammer zwischen einer Anschlagfläche der Aufnahmekammer und dem ersten Schlingenschließmittel festzulegen. An dem ersten Schlingenschließmittel und/oder an dem zweiten Schlingenschließmittel und/oder an dem Läufer des letzteren können Formschlußflächen vorgesehen sein, welche die jeweilige Komponente in der Aufnahmekammer auch gegen Drehung um die Einführungsrichtung sichern können.

Wenn hier von einem flexiblen Strangelement gesprochen wird, so ist primär an ein Stahldrahtseil gedacht; grundsätzlich ist es aber auch denkbar, als flexible Strangmittel auch Ketten, z. B. mit Schlauchumkleidung, einzusetzen oder sonstige Gliederkörper.

Geschützt soll nicht nur die Blockiereinrichtung im Zusammenbau mit dem jeweiligen mobilen Objekt sein, sondern auch die Blokkiereinrichtung isoliert, die zum Anbau an das mobile Objekt geeignet ist. Weiterhin soll eine Komponentenbaugruppe geschützt sein, welche die zum Anbau der Blockiereinrichtung an dem mobilen Objekt notwendigen Komponenten umfaßt.

Die beiliegenden Figuren erläutern die Erfindung anhand eines Ausführungsbeispiels. Es stellen dar:
- Fig. 1: teilweise im Schnitt die Blockiereinrichtung an einem Rahmenrohr eines Fahrrads, und zwar in Festlegestellung für die Fahrt;
- Fig. 2: die Blockiereinrichtung gemäß Fig. 1 in einer Blokkierbereitschaftsstellung und
- Fig. 3: die Blockiereinrichtung nach Fig. 1 und 2 in einer blockierenden Stellung.

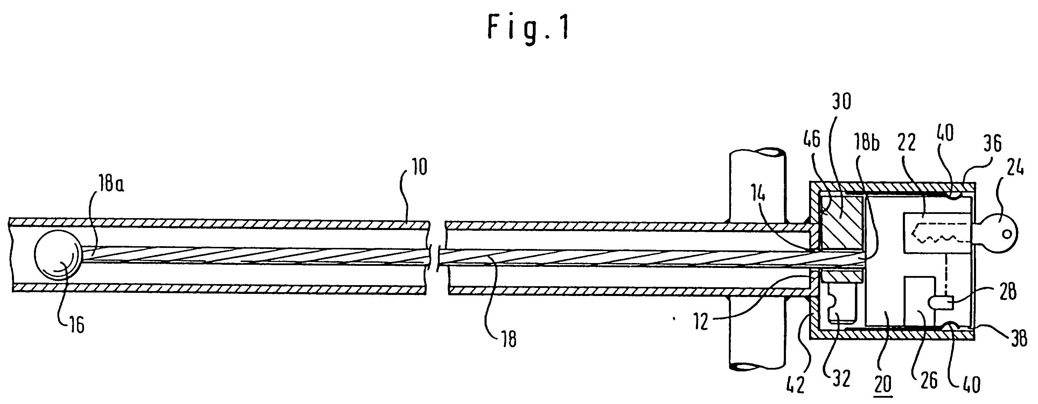

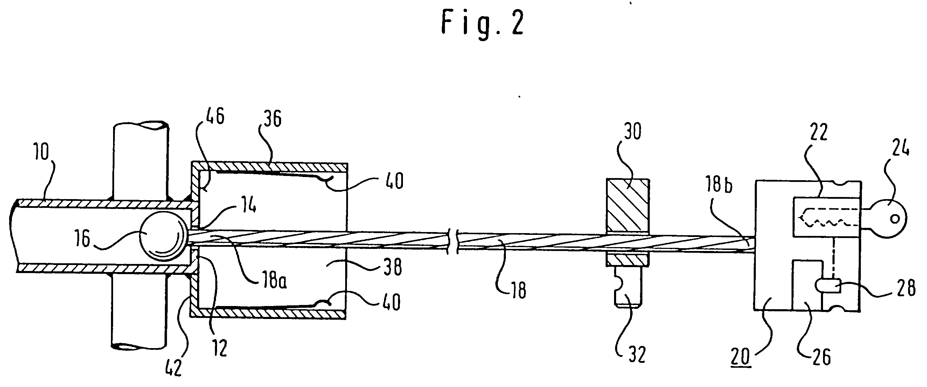

In Fig. 1 ist das Rahmenrohr eines Fahrrads schematisch dargestellt und mit 10 bezeichnet. Dieses Rahmenrohr 10 ist an seinem einen Ende durch eine Ankerplatte 12 verschlossen, welche einen Durchgang 14 besitzt. Innerhalb des Rahmenrohrs 10 ist eine Verankerungskugel 16 mit einem Drahtseil 18 verpreßt, verschweißt, verlötet oder sonstwie verbunden. Das Drahtseil 18 kann, wie aus dem Vergleich der Fig. 1 und 2 zu ersehen, zwischen einer eingeschobenen Stellung (Fig. 1) und einer ausgezogenen Stellung, der Blockierbereitschaftsstellung (Fig. 2) verschoben werden. Zum Gebrauch im weiteren Verlauf der Beschreibung sei das mit der Verankerungskugel 16 verbundene Ende des Drahtseils 18 als Primärende bezeichnet. Das andere Ende 18b, das Sekundärende, ist mit einem ersten Schlingenschließmittel 20 verbunden, beispielsweise verpreßt oder verspleißt. Das erste Schlingenschließmittel 20 umfaßt ein Schließwerk 22 zur Betätigung durch einen Schlüssel 24 und eine Schließbolzenaufnahme 26, welche von einem Blockierstift 28 angeschnitten wird. Auf dem Drahtseil 18 ist zwischen den beiden Enden 18a und 18b eine im folgenden als Läufer bezeichnete Öse beweglich angeordnet, welche mit einem Schließbolzen 32 zum blockierenden Eingriff in die Schließbolzenaufnahme 26 verbunden ist.

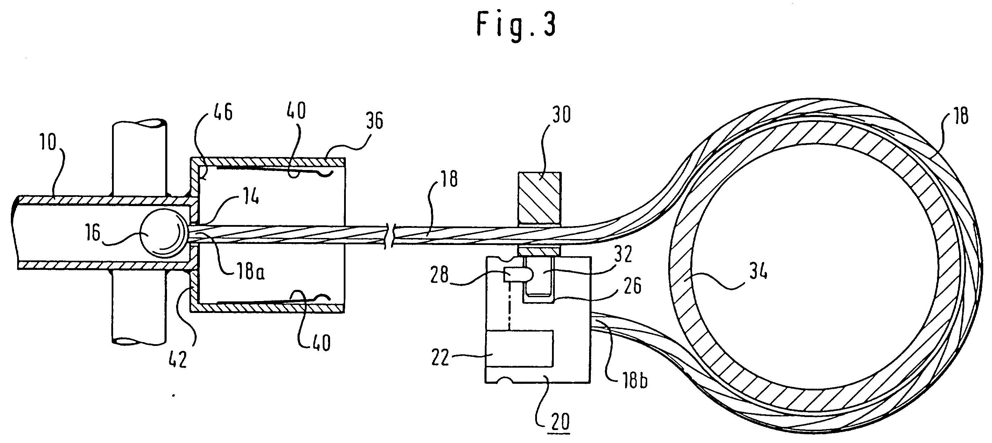

Gemäß Fig. 3 ist eine Schlinge 32,30,18,18b,20 geschlossen. Sie ist geschlossen um einen schematisch dargestellten Laternenpfahl 34, so daß das Zweirad, repräsentiert durch das Rahmenrohr 10, ortsfest blockiert ist.

In Fig. 1 ist dargestellt, wie die Blockiereinrichtung bei Nichtgebrauch, also während der Fahrt, an dem Zweiradrahmen festgelegt ist. Wie schon angedeutet, ist das Drahtseil 18 in das Rahmenrohr 10 eingeschoben. Zur Festlegung des ersten Schlingenschließmittels 20 an dem Fahrradrahmen ist an dem in der Fig. 1 rechten Ende des Rahmenrohrs 10 ein Aufnahmegehäuse 36 mit einer Aufnahmekammer 38 angebracht, wobei die Aufnahmekammer in ihrer Querschnittsform dem ersten Schlingenschließmittel 20 derart angepaßt ist, daß dieses in der Aufnahmekammer 38 unverdrehbar eingeführt werden kann. Eine Verrastungsfeder 40 dient der Festlegung des ersten Schlingenschließmittels 20 in der Aufnahmekammer 38 entlang seiner Einführungsrichtung, wenn es einmal eingeführt ist. In der Festlegestellung gemäß Fig. 1 liegt das zweite Schlingenschließmittel 30 mit dem Schließbolzen 32 zwischen einer Anschlagfläche 46 der Gehäusewand 42 einerseits und dem ersten Schlingenschließmittel 20 fest, wobei auch die Umrißform des Läufers so angepaßt sein kann, daß sie in der Aufnahmekammer 38 drehfest festgelegt ist.

Wenn hier von schließgeheimnisreagiblem Schließwerk die Rede ist, so soll neben den bereits ausdrücklich erwähnten schlüsselbetätigten Schließwerken auch die Möglichkeit von Schließwerken bestehen, die durch Zahleneinstellung oder durch Code-Karte und dgl. zu öffnen und ggf. zu schließen sind.

## Patentansprüche

1. Blockiereinrichtung für ein mobiles Objekt, insbesondere ein Zweirad, umfassend ein flexibles Strangmittel (18), welches zum einen an dem mobilen Objekt (10) verankert oder verankerbar ist und zum anderen unter Verwendung von zwei zusammenwirkenden Schlingenschließmitteln (20;30,32) zu einer Schlinge (30,32,20,18b,18) schließbar ist, wobei von den Schlingenschließmitteln (20;30,32) mindestens eines mit einem schließgeheimnisreagiblen Schließwerk (22) ausgerüstet ist und wobei von den beiden Schlingenschließmitteln (20;30,32) ein erstes an dem flexiblen Strangmittel (18) verankert ist,
dadurch gekennzeichnet,
daß ein zweites von den beiden Schlingenschließmitteln (20;30,32) auf einem Läufer (30) angeordnet ist, welcher längs des flexiblen Strangmittels (18) auf wenigstens einem Teil des Weges zwischen dessen Verankerung (14,16) an dem mobilen Objekt (10) und dem ersten Schlingenschließmittel (20) beweglich ist.

2. Blockiereinrichtung nach Anspruch 1,
dadurch gekennzeichnet,
daß das flexible Strangmittel (18) an einem Primärende (18a) ein Verankerungsmittel (16) für die Verankerung an dem mobilen Objekt (10) aufweist und an einem Sekundärende (18b) mit dem ersten Schlingenschließmittel (20) verbunden ist.

3. Blockiereinrichtung nach einem der Ansprüche 1 und 2,
dadurch gekennzeichnet,
daß das Schließwerk (22) an dem ersten Schlingenschließmittel (20) angebracht ist.

4. Blockiereinrichtung nach einem der Ansprüche 1 - 3, dadurch gekennzeichnet,
daß das Schließwerk (22) ein schlüsselbetätigtes Schließwerk (22) ist.

5. Blockiereinrichtung nach einem der Ansprüche 1 - 4,
dadurch gekennzeichnet,
daß das mit dem Schließwerk (22) ausgerüstete Schließmittel (20) eine Schließbolzenaufnahme (26) für einen an dem anderen Schlingenschließmittel (30,32) angebrachten Schließbolzen (32) aufweist.

6. Blockiereinrichtung nach einem der Ansprüche 1 - 5,
dadurch gekennzeichnet,
daß an dem mobilen Objekt (10) Festlegemittel (10,36) für die Festlegung des flexiblen Strangmittels (18) oder/und des ersten Schlingenschließmittels (20) oder/und des zweiten Schlingenschließmittels (30,32) angebracht oder anbringbar sind.

7. Blockiereinrichtung nach Anspruch 6,
dadurch gekennzeichnet,
daß als Festlegemittel für das flexible Strangmittel (18) eine Aufnahmeführung (in 10), insbesondere in Form eines Aufnahmekanals (10), an dem mobilen Objekt (10) vorgesehen ist und daß das flexible Strangmittel (18) relativ zu der Aufnahmeführung (in 10) zwischen einer Festlegestellung (Fig. 1) und einer Blockierbereitschaftsstellung (Fig. 2) ein- und ausfahrbar ist.

8. Blockiereinrichtung nach einem der Ansprüche 6 und 7,
dadurch gekennzeichnet,
daß als Festlegemittel für das erste Schlingenschließmittel (20) an dem mobilen Objekt (10) eine Aufnahmekammer (38) für dieses erste Schlingenschließmittel (20) vorgesehen ist.

9. Blockiereinrichtung nach Anspruch 8,
dadurch gekennzeichnet,
daß die Aufnahmekammer (38) für das erste Schlingenschließmittel (20) an einem Ende (14) der Aufnahmeführung (in 10) für das flexible Strangmittel (18) angeordnet ist, durch welches hindurch das flexible Strangmittel (18) in die Aufnahmeführung (in 10) ein- bzw. ausfahrbar ist.

10. Blockiereinrichtung nach Anspruch 8 oder 9,
dadurch gekennzeichnet,
daß das erste Schlingenschließmittel (20) in der Aufnahmekammer (38) feststellbar ist.

11. Blockiereinrichtung nach einem der Ansprüche 6 - 10,
dadurch gekennzeichnet,
daß das zweite Schlingenschließmittel (30,32) an dem ersten Schlingenschließmittel (20) oder/und an einem Festlegemittel (38,46) für das erste Schlingenschließmittel (20) feststellbar ist.

12. Blockiereinrichtung nach Anspruch 11,
dadurch gekennzeichnet,
daß das zweite Schlingenschließmittel (30,32) gemeinsam mit dem ersten Schlingenschließmittel (20) diesem vorauslaufend in eine Aufnahmekammer (38) einführbar und in dieser zwischen einer Anschlagfläche (46) der Aufnahmekammer (38) und dem ersten Schlingenschließmittel (20) festlegbar ist.

## Claims

1. A locking device for a mobile object, in particular a bicycle, comprising a flexible elongate member (18) which, on the one hand, is or can be anchored to the mobile object (10) and, on the other hand, can be closed using two cooperating loop-closing means (20;30,32) to form a loop (30,32,20,18b,18), wherein at least one of the loop-closing means (20;30,32) is provided with a lock mechanism (22) which can react with a lock security means, and wherein a first one of the two loop-closing means (20;30,32) is anchored to the flexible elongate member (18), characterised in that a second one of the two loop-closing means (20;30,32) is disposed on a runner (30) which is movable along the flexible elongate member (18) on at least one portion of the travel between its anchoring (14,16) on the mobile object (10) and the first loop-closing means (20).

2. A locking device according to Claim 1, characterised in that at a primary end (18a) the flexible elongate member (18) has an anchoring means (16) for anchoring to the mobile object (10) and at a secondary end (18b) it is connected to the first loop-closing means (20).

3. A locking device according to either Claim 1 or Claim 2, characterised in that the lock mechanism (22) is mounted on the first loop-closing means (20).

4. A locking device according to any one of Claims 1 to 3, characterised in that the lock mechanism (22) is a key-operated lock mechanism (22).

5. A locking device according to any one of Claims 1 to 4, characterised in that the closing means (20) provided with the lock mechanism (22) has a locking bolt socket (26) for a locking bolt (32) mounted on the other loop-closing means (30,32).

6. A locking device according to any one Claims 1 to 5, characterised in that locating means (10,36) for locating the flexible elongate member (18) and/or the first loop-closing means (20) and/or the second loop-closing means (30,32) is/are or can be mounted on the mobile object (10).

7. A locking device according to Claim 6, characterised in that as the locating means for the flexible elongate member (18) an accommodating guide (in 10), particularly in the form of an accommodating passage (10), is provided on the mobile object (10), and in that the flexible elongate member (18) can be inserted and retracted relative to the accommodating guide (in 10) between a locating position (Fig. 1) and a locking readiness position (Fig. 2).

8. A locking device according to either Claim 6 or Claim 7, characterised in that an accommodating chamber (38) for the first loop-closing means (20) is provided as the locating means for said first loop-closing means (20) on the mobile object (10).

9. A locking device according to Claim 8, characterised in that the accommodating chamber (38) for the first loop-closing means (20) is disposed at one end (14) of the accommodating guide (in 10) for the flexible elongate member (18), through which the flexible elongate member (18) can be inserted into and retracted from the accommodating guide (in 10).

10. A locking device according to Claim a or 9, characterised in that the first loop-closing means (20) can be locked in the accommodating chamber (38).

11. A locking device according to any one of Claims 6 to 10 , characterised in that the second loop-closing means (30,32) can be locked to the first loop-closing means (20) and/or to a locating means (38,46) for the first loop-closing means (20).

12. A locking device according to Claim 11, characterised in that the second loop-closing means (30,32) can be inserted together with the first loop-closing means (20), preceding the latter, into an accommodating chamber (38) and it can be located therein between an abutment surface (46) of the accommodating chamber (38) and the first loop-closing means (20).

## Revendications

1. Dispositif de blocage destiné à un objet mobile, notamment un deux-roues, comprenant un câble flexible (18), qui d'une part est ancré ou peut être ancré à l'objet mobile (10) et qui d'autre part peut être fermé en une boucle (30, 32, 20, 18b, 18), par utilisation de deux moyens de fermeture en boucle (20 ; 30, 32) coopérants, au moins l'un des moyens de fermeture (20 ; 30, 32) étant équipé d'une serrure (22) qui réagit à un secret de fermeture et un premier des deux moyens de fermeture (20 ; 30, 32) étant ancré sur le câble flexible (18),
caractérisé
en ce qu'un deuxième des deux moyens de fermeture en boucle (20 ; 30, 32) est disposé sur un curseur (30) qui est déplaçable le long du câble flexible (18), sur au moins une partie de la distance entre son ancrage (14, 16) sur l'objet mobile (10) et le premier moyen de fermeture en boucle (20).

2. Dispositif de blocage selon la revendication 1,
caractérisé
en ce que le câble flexible (18) présente, à une extrémité primaire (18a), un moyen d'ancrage (16) pour l'ancrage sur l'objet mobile (10) et est relié à une extrémité secondaire (18b) au premier moyen de fermeture en boucle (20).

3. Dispositif de blocage selon l'une des revendications 1 et 2,
caractérisé
en ce que la serrure (22) est montée sur le premier moyen de fermeture en boucle (20).

4. Dispositif de blocage selon l'une des revendications 1 à 3,
caractérisé
en ce que la serrure (22) est une serrure (22) actionnée au moyen d'une clé.

5. Dispositif de blocage selon l'une des revendications 1 à 4,
caractérisé
en ce que le moyen de fermeture (20) équipé de la serrure (22) présente un logement (26) pour un goujon de fermeture (32) fixé à l'autre moyen de fermeture en boucle (30, 32).

6. Dispositif de blocage selon l'une des revendications 1 à 5,
caractérisé
en ce que des moyens de fixation (10, 13) sont prévus ou peuvent être prévus sur l'objet mobile (10) pour la fixation du câble flexible (18) ou/et du premier moyen de fermeture en boucle (20) ou/et du deuxième moyen de fermeture en boucle (30, 32).

7. Dispositif de blocage selon la revendication 6,
caractérisé
en ce qu'un guidage de réception (dans 10), notamment en forme de canal de réception (10), est prévu sur l'objet mobile (10) comme moyen de fixation pour le câble flexible (18), et en ce que le câble flexible (18) peut être introduit et extrait par rapport au guidage de réception (dans 10) entre une position de fixation (fig. 1) et une position de préparation au blocage (fig. 2).

8. Dispositif de blocage selon l'une des revendications 6 et 7,
caractérisé
en ce qu'une chambre de réception (38) est prévue sur l'objet mobile (10) pour le premier moyen de fermeture en boucle (20), comme moyen de fixation de ce premier moyen de fermeture en boucle (20).

9. Dispositif de blocage selon la revendication 8,
caractérisé
en ce que la chambre de réception (38) destinée au premier moyen de fermeture en boucle (20) est disposée à une extrémité (14) du guidage de réception (dans 10) du câble flexible (18), en ce que le câble flexible (18) peut être introduit dans le guidage de réception (dans 10) ou extrait de celui-ci à travers la chambre de réception (38).

10. Dispositif de blocage selon la revendication 8 ou 9,
caractérisé
en ce que le premier moyen de fermeture en boucle (20) peut être bloqué dans la chambre de réception (38).

11. Dispositif de blocage selon l'une des revendications 6 à 10,
caractérisé
en ce que le deuxième moyen de fermeture en boucle (30, 32) peut être bloqué sur le premier moyen de fermeture en boucle (20) ou/et sur un premier moyen de fixation (38, 46) destiné au premier moyen de fermeture en boucle (20).

12. Dispositif de blocage selon la revendications 11,
caractérisé
en ce que le deuxième moyen de fermeture en boucle (30, 32) peut être introduit avec le premier moyen de fermeture en boucle (20) en précédant celui-ci dans une chambre de réception (38) et peut être fixé dans cette dernière entre une surface de butée (46) de la chambre de réception (38) et le premier moyen de fermeture en boucle (20).
